# EUROPÄISCHE PATENTSCHRIFT

(11) **EP 3 756 820 B1**
(45) Veröffentlichungstag und Bekanntmachung des Hinweises auf die Patenterteilung: **14.12.2022**
(21) Anmeldenummer: 19182105.7
(22) Anmeldetag: 24.06.2019
(51) Int. Cl.: B23Q 1/00, B23Q 3/10

(54) **NULLPUNKTSPANNSYSTEM FÜR WERKZEUGMASCHINEN, INSBESONDERE DREH- UND/ODER FRÄSMASCHINEN**
ZERO POINT CLAMPING SYSTEM FOR MACHINE TOOLS, ESPECIALLY ROTARY AND / OR MILLING MACHINES
SYSTÈME DE SERRAGE À POINT ZÉRO POUR MACHINES-OUTILS, EN PARTICULIER TOURS ET / OU DE FRAISEUSES

(43) Veröffentlichungstag der Anmeldung: 30.12.2020
(73) Patentinhaber: HVM Technology GmbH, 28876 Oyten (DE)
(72) Erfinder: HENKE, Volker, 28876 Oyten (DE); VIETS, Henrico, 27404 Elsdorf (DE); MEIER, Matthias, 28876 Oyten (DE)
(74) Vertreter: Eisenführ Speiser

(56) Entgegenhaltungen:
- EP-B1- 3 043 954
- DE-A1- 10 155 077
- DE-A1-102011 086 853
- DE-A1-102014 112 843
- DE-B4- 10 155 077

## Beschreibung

Die Erfindung betrifft ein Nullpunktspannsystem für Werkzeugmaschinen, insbesondere für Dreh- und/oder Fräsmaschinen, wobei das Spannsystem eine Spannplatte aufweist, die dazu eingerichtet ist, ortsfest relativ zu der Werkzeugmaschine angeordnet zu werden, sowie mindestens eine Spannvorrichtung zum Spannen von Werkstücken, die dazu eingerichtet ist, auf der Spannplatte montiert zu werden, und einen Festigungsmechanismus, der dazu eingerichtet ist, die Spannvorrichtung an der Spannplatte reversibel lösbar zu befestigen.

Nullpunktspannsysteme sind in der Werkzeugmaschinenindustrie allgemein bekannt und dienen zur möglichst positionsgetreuen und wiederholgenauen Montage von Spannvorrichtungen auf Maschinentischen von Werkzeugmaschinen. Eine möglichst genaue und wiederholgenaue Positionierung der Spannvorrichtungen relativ zu den Werkzeugmaschinen ist zur Minimierung von Rüstzeiten und damit einhergehend zur Optimierung der Fertigungsqualität und des Fertigungsprozesses heutzutage unabdingbar.

Konventionelle Nullpunktspannsysteme basieren auf dem Ansatz, dass die Spannvorrichtung mehrere Montagefüße aufweist und dass das Spannsystem eine auf dem Maschinentisch installierbare Spannplatte umfasst, welche Ausnehmungen zur Aufnahme der Montagefüße der Spannvorrichtung aufweist. Zusätzlich umfassen die bekannten Spannplatten einen in die Spannplatte integrierten Befestigungsmechanismus, mit dem die Montagefüße der Spannvorrichtungen in einer Referenzposition, auch Nullposition genannt, arretiert werden können. Üblicherweise weisen solche Spannplatten eine Vielzahl von Ausnehmungen auf, damit eine Montage der Spannvorrichtung an verschiedenen Positionen auf der Spannplatte ermöglicht werden kann. Um die Funktion der präzisen Befestigung zu gewährleisten, müssen alle Ausnehmungen durch den in die Spannplatte integrierten Spannmechanismus erreichbar sein, was eine relativ aufwendige und sich im Wesentlichen über die gesamte Spannplatte erstreckende Mechanik erfordert.

Aus DE 10 2014 112843 A1 ist ein Nullpunkt-Spannsystem für Werkzeugmaschinen mit einem Unterbau und einem auf dem Unterbau befestigbaren Spannbock zum Spannen von Werkstücken bekannt.

Wenngleich die Funktionsweise konventioneller Spannsysteme im Allgemeinen als befriedigend erachtet wird, so werden doch das Eigengewicht der Spannplatte und die mit der Komplexität des Spannsystems einhergehende Wartungsanfälligkeit als verbesserungswürdig angesehen.

Der Erfindung lag folglich die Aufgabe zugrunde, ein Nullpunktspannsystem der eingangs bezeichneten Art dahingehend zu verbessern, dass die im Stand der Technik aufgefundenen Nachteile möglichst weitgehend überwunden werden. Insbesondere lag der Erfindung die Aufgabe zugrunde, ein Nullpunktspannsystem der eingangs bezeichneten Art vorzuschlagen, bei dem der Wartungsbedarf und/oder das Eigengewicht reduziert werden können, ohne die Genauigkeit des Spannvorgangs zu beeinträchtigen. Die Erfindung löst die ihr zugrundeliegende Aufgabe, indem sie ein Nullpunktspannsystem gemäß Anspruch 1 vorschlägt. Insbesondere schlägt die Erfindung vor, dass die Spannvorrichtung mehrere Montageausnehmungen aufweist und die Spannplatte eine Mehrzahl von Montageelementen aufweist, die dazu eingerichtet sind, in die Montageausnehmungen der Spannvorrichtung einzugreifen, wobei die Spannvorrichtung den Befestigungsmechanismus aufweist, und wobei der Befestigungsmechanismus dazu eingerichtet ist, die Montageelemente reversibel lösbar zu fixieren, wenn jene sich mit den korrespondierenden Montageausnehmungen in Eingriff befinden.

Mit anderen Worten schlägt die Erfindung einen vollständigen Paradigmenwechsel dahingehend vor, dass nun nicht mehr die an der Werkzeugmaschine bzw. dem Maschinentisch der Werkzeugmaschine zu befestigende Spannplatte den Spannmechanismus enthält, sondern die Spannvorrichtung selbst. Die Erfindung beruht auf der Erkenntnis, dass in der Regel nicht alle verfügbaren Montagepositionen auf der Spannplatte mit Spannvorrichtungen belegt sind, sondern dass in der Regel nur eine oder einige der Montagepositionen auf der Spannplatte für einen Arbeitsvorgang benötigt werden, während neben diesen Positionen Platz auf der Spannplatte freibleibt. Im Stand der Technik wurden aber auch diese freistehenden Positionen auf der Spannplatte noch durch den in die Spannplatte integrierten Befestigungsmechanismus "versorgt", der aber für die meisten Fälle diesbezüglich überflüssig war.

Die Erfindung folgt nun dem Ansatz, den Befestigungsmechanismus der Spannvorrichtung zuzuordnen und somit nur noch Befestigungsmechaniken an den Orten zu benötigen, wo tatsächlich Spannvorrichtungen gebraucht werden. Das führt dazu, dass die Spannplatte einen sehr viel weniger komplexen mechanischen Aufbau hat. Die gesamte Systemkomplexität nimmt folglich ab. Gleichzeitig können die Spannvorrichtungen mit ihrem eigenen Befestigungsmechanismus, der nach allgemein bekannter Art eines Nullpunktspannsystems ausgebildet sein kann, genauso präzise montiert werden wie zuvor auch. Es werden die Montageelemente mit dem Befestigungsmechanismus reversibel lösbar gekoppelt, beispielsweise durch Klemmen verspannt, nur, dass diese sich eben gemäß der Erfindung aus der Spannplatte heraus erstrecken und in die Spannvorrichtung hinein. Es sind somit auch nur an den Stellen Montageelemente notwendig, an denen Spannvorrichtungen installiert werden sollen, während in den übrigen Bereichen der Spannplatte nicht benötigte Montageelemente nicht vorgesehen werden müssen bzw. entfernt werden können. Dies ist Gegenstand bevorzugter Ausführungsformen.

In einer bevorzugten Weiterbildung sind die Montageelemente entweder permanent an der Spannplatte befestigt oder reversibel lösbar in dafür vorgesehenen Aufnahmen installiert. Da die Montageelemente gemäß der Erfindung nicht positionsgetreu in der Spannplatte verspannt werden, ist eine präzise Positionierung der Montageelemente nötig. Vorzugsweise werden die Montageelemente mit Passflächen versehen und die Aufnahme für die Montageelemente mit korrespondierenden Passflächen, sodass die Montageelemente und Aufnahmen passgenau auf der Spannplatte befestigt werden können. Aus einem Passungssystem werden hierbei vorzugsweise geeignete Toleranzpaarungen ausgewählt, insbesondere werden Übergangs- oder Übermaßpassungen ausgewählt mit einem Toleranzfeld von ±0,02 mm oder weniger.

In einer weiteren bevorzugten Ausführungsform weist die Spannplatte ihrerseits eine Vielzahl von Montageelementen auf, oder zumindest Aufnahmen für die Montageelemente, wobei die Anzahl jener Montageelemente bzw. Aufnahmen für die Montageelemente auf der Spannplatte höher ist als die Anzahl der Montageausnehmungen an jeweils einer Spannvorrichtung. Dies ermöglicht das Positionieren der Spannvorrichtung an verschiedensten Stellen auf der Spannplatte. Es können, müssen aber nicht sämtliche Aufnahmen auf der Spannplatte mit Montageelementen versehen werden. Nicht benötigte Aufnahmen können beispielsweise mit Blindstopfen verschlossen werden.

In einer weiteren bevorzugten Ausführungsform sind die Aufnahmen für die Montageelemente bzw. die Montageelemente selbst auf der Spannplatte in einem Raster mit einem vorbestimmten Abstand zwischen jeweils benachbarten Montageelementen angeordnet. Das Raster ist vorzugsweise ein in Zeilen und Spalten aufgeteiltes Raster mit gleichen Abständen in Zeilenrichtung wie in Spaltenrichtung zwischen benachbarten Aufnahmen bzw. zwischen benachbarten Montageelementen. Dies ist insbesondere dann von Vorteil, wenn Spannvorrichtungen eingesetzt werden, wie in der Industrie üblich, die vier äquidistant in einem Quadrat angeordnete Montagepunkte aufweisen, um möglichst große Montageflexibilität zu gewährleisten.

In einer weiteren bevorzugten Ausführungsform ist dieses Raster ein erstes Raster, das einen ersten Abstand zwischen jeweils benachbarten Aufnahmen für die Montageelemente definiert, und die Spannplatte weist zusätzlich wenigstens ein zusätzliches zweites Raster auf, das einen zweiten Abstand zwischen jeweils benachbarten Aufnahmen für die Montageelemente definiert. Hierdurch wird es möglich, gezielt Montageraster für Spannvorrichtungen mit voneinander abweichenden Montagemaßen auf der Spannplatte vorzusehen. Dies ermöglicht ein Umrüsten zwischen unterschiedlichen Spannvorrichtungen, ohne einen Wechsel der Spannplatte zu erfordern.

Wie vorstehend angedeutet, sind in einer bevorzugten Ausführungsform Aufnahmen, die nicht bereits von jeweils einem Montageelement belegt sind, mittels eines Schutzstopfens verschlossen, wobei der Verschlussstopfen weiter vorzugsweise so dimensioniert ist, dass er in eingesetztem Zustand vollständig in die Ausnehmung versenkt ist. Demgemäß schließt der Verschlussstopfen mit anderen Worten entweder bündig mit der Oberfläche der Spannplatte ab oder liegt vollständig innerhalb der Oberfläche der Spannplatte, ohne über die Spannplattenoberfläche hinaus vorzustehen. Dies erleichtert wiederum die Montage und Anordnung der Spannvorrichtungen auf der Spannplatte.

Die Spannvorrichtung weist vorzugsweise zwei, drei oder vier Montageausnehmungen zur Aufnahme der entsprechenden Montageelemente auf.

Die Erfindung unterbreitet verschiedene Vorschläge zur Implementierung des Befestigungsmechanismus an der Spannvorrichtung. Gemäß einer ersten bevorzugten Alternative weist die Spannvorrichtung einen Grundkörper auf, und der Befestigungsmechanismus ist in dem Grundkörper integriert.

In einer zweiten bevorzugten Alternative weist die Spannvorrichtung einen Grundkörper auf, der Befestigungsmechanismus ist aber als Spannadapter ausgebildet und dazu eingerichtet, einerseits mit dem Grundkörper der Spannvorrichtung reversibel lösbar verbunden zu werden und andererseits mit der Spannplatte.

Ein solcher Spannadapter kann dazu verwendet werden, Spannvorrichtungen für konventionelle Nullpunktsysteme auf eine Spannplatte zu montieren, die gemäß der Erfindung ausgebildet ist.

Vorzugsweise weist ein solcher Spannadapter eine erste Seitenfläche auf, die der Spannplatte zugeordnet ist und welche die Montageausnehmungen aufweist, die dazu eingerichtet sind, die Montageelemente der Spannplatte aufzunehmen.

Diese Montageelemente sind im Fall des Spannadapters sogenannte erste Montageelemente, und die Spannvorrichtung weist ferner eine Anzahl zweiter Montageelemente auf, wobei der Spannadapter eine zweite Seitenfläche aufweist, vorzugsweise gegenüber der ersten Seitenfläche, die der Spannvorrichtung zugeordnet ist und welche eine Anzahl zweiter Montageausnehmungen aufweist, die ihrerseits dazu eingerichtet sind, die zweiten Montageelemente (der Spannvorrichtung) aufzunehmen.

Weiter vorzugsweise weist der Spannadapter dann einen zweiten Befestigungsmechanismus auf, der dazu eingerichtet ist, die zweiten Montageelemente reversibel lösbar zu fixieren, wenn jene sich mit den korrespondierenden zweiten Montageausnehmungen in Eingriff befinden.

Gemäß einer weiteren bevorzugten Alternative besteht der Spannadapter aus mehreren separaten Spanntürmen bzw. ist in Form mehrerer separater Spanntürme ausgebildet, wobei jedes Spannelement eine erste Seitenfläche aufweist, die der Spannplatte zugeordnet ist und welche eine Montageausnehmung aufweist, die dazu eingerichtet ist, ein Montageelement der Spannplatte aufzunehmen.

Da die Spannvorrichtung vorzugsweise mehrere zweite Montageelemente aufweist, weist vorzugsweise der Spannadapter für jedes dieser zweiten Montageelemente ein Spannelement auf, wobei das Spannelement jeweils eine zweite Seitenfläche aufweist, vorzugsweise gegenüber der ersten Seitenfläche, die der Spannvorrichtung zugeordnet ist, und welche eine zweite Montageausnehmung aufweist, die dazu eingerichtet ist, jeweils eines der zweiten Montageelemente der Spannvorrichtung aufzunehmen. Der in diesem Sinne mehrteilig ausgebildete Spannadapter liegt dann also in Form von mehreren Spanntürmen vor, die wie Füße die Spannvorrichtung mit der Spannplatte verbinden.

Weiter vorzugsweise weist ein solches Spannelement neben dem ersten Befestigungsmechanismus einen zweiten Befestigungsmechanismus auf, der dazu eingerichtet ist, das zweite Montageelement reversibel lösbar zu fixieren, wenn jenes sich mit der korrespondierenden zweiten Montageausnehmung in Eingriff befindet.

In den vorstehend beschriebenen bevorzugten Ausführungsformen ist allgemein die Rede von Montageelementen. Diese Montageelemente sind vorzugsweise als Spannbolzen ausgebildet und weisen eine keilförmig bzw. konisch verjüngte Klemmfläche auf, die dazu eingerichtet ist, mit einem korrespondierenden Spannkeil des Befestigungsmechanismus zusammenzuwirken, wobei sie beim Verspannen durch Aneinanderabgleiten des Keils mit der korrespondierenden Spannfläche, bezogen auf eine Längsachse der Spannbolzen, in axialer und radialer Richtung mit der Spannvorrichtung verspannt werden, bzw. mit dem Spannadapter.

Im erfindungsgemäßen Spannsystem können verschiedene Spannvorrichtungen zum Einsatz kommen, beispielsweise Zentrierspanner mit zwei Spannbacken, oder auch zentrisch spannende Mehrbackenspannfutter, insbesondere Dreibacken- oder Vierbacken-Spannfutter. Besonders bevorzugt werden Spannvorrichtungen mit Ausgleichsfunktion verwendet, wie beispielsweise Dreibacken-Spannfutter oder Vierbacken-Spannfutter mit Ausgleichsfunktion. Unter einer Ausgleichsfunktion wird hierbei die Funktion verstanden, beim Spannen unrunder Werkstücke durch zentrisch ausgleichendes Ausweichen jeweils gegenüberliegender Spannbacken der Geometrie des Werkstücks nachzugeben, ohne die Zentrizität beim Spannen aufzugeben. Ausgleichsspannfutter sind beispielsweise bekannt aus DE 102013201231 B3, DE 102015104502 B4 oder EP 3028794 B1.

Die Erfindung wird nachfolgend unter Bezugnahme auf die beigefügten Figuren anhand bevorzugter Ausführungsbeispiele näher beschrieben. Hierbei zeigen:
- Figur 1: eine schematische räumliche Darstellung eines Nullpunktspannsystems gemäß einem bevorzugten Ausführungsbeispiel,
- Figur 2: eine schematische räumliche Darstellung einer Spannvorrichtung für das Spannsystem gemäß Figur 1,
- Figuren 3a, b: schematische Seitenansichten einer Spannplatte für das Spannsystem gemäß Figur 1,
- Figuren 4a, b: schematische Seitenansichten eines Montageelements für das Spannsystem gemäß Figur 1,
- Figur 5: eine schematische räumliche Ansicht für eine alternative Spannplatte für das Spannsystem gemäß Figur 1,
- Figur 6: eine schematische räumliche Darstellung eines Spannsystems gemäß den Figuren 1 bis 5 mit einer alternativen bevorzugten Spannvorrichtung,
- Figuren 7a - c: schematische räumliche Detailansichten der Spannvorrichtung aus Figur 6,
- Figur 8: einen alternativen Spannadapter für das Spannsystem gemäß den Figuren 1 bis 7 und
- Figuren 9a - d: einen weiteren alternativen Spannadapter für das Spannsystem gemäß den Figuren 1 bis 8.

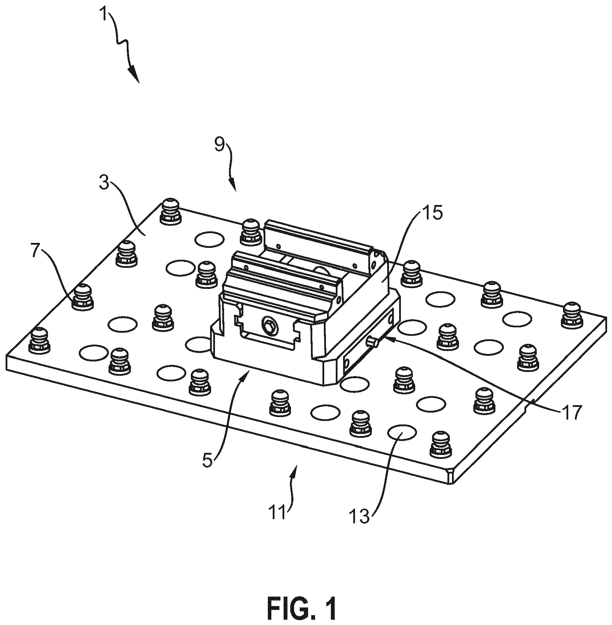

In Figur 1 ist ein Nullpunktspannsystem 1 für eine Werkzeugmaschine, wie beispielsweise eine Dreh- und/oder Fräsmaschine gezeigt. Das Spannsystem 1 weist eine Spannplatte 3 auf, sowie eine Spannvorrichtung 5 zum zentrischen Spannen von Werkstücken. Die Spannvorrichtung 5 ist positionsgenau auf der Spannplatte 3 montiert.

Hierzu besitzt die Spannplatte 3 eine Vielzahl von Montageelementen 7, die reversibel lösbar auf einer ersten, der Spannvorrichtung 5 zugewandten Seite 9 der Spannplatte 3 angeordnet sind. Die Montageelemente 7, in dem Ausführungsbeispiel als Positionierbolzen ausgebildet, sind vorzugsweise in entsprechende Passbohrungen eingesetzt und dort verschraubt.

Die Spannplatte 3 weist eine Vielzahl von Durchgangsöffnungen 13 auf, mittels derer die Spannplatte 3 an einer Werkzeugmaschine, beispielsweise auf einem Maschinentisch der Werkzeugmaschine, befestigt werden kann, vorzugsweise mittels Verschrauben.

Die Spannvorrichtung 5 weist einen Befestigungsmechanismus 17 auf, der dazu eingerichtet ist, die Spannvorrichtung 5 an den Montageelementen 7 auf der Spannplatte 3 positionsgenau reversibel lösbar zu befestigen.

Der Befestigungsmechanismus 17 ist in dem Ausführungsbeispiel gemäß Figur 1 in einen Grundkörper 15 der Spannvorrichtung integriert.

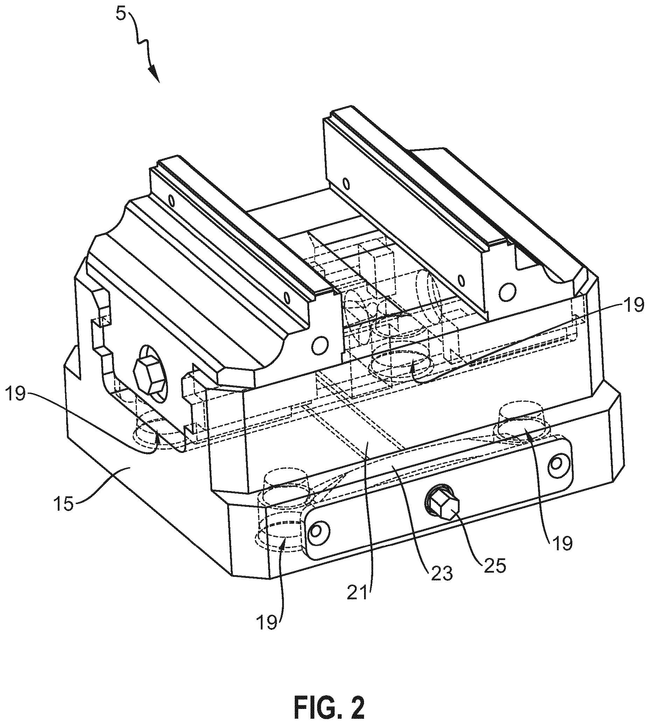

Figur 2 zeigt die Spannvorrichtung 5 in Alleinstellung mit teilweise transparentem Grundkörper 15. An einer Unterseite der Spannvorrichtung 5 sind mehrere Montageausnehmungen 19 ausgebildet, die zur Aufnahme der Montageelemente 7 auf der Spannplatte 3 ausgebildet sind.

Der Befestigungsmechanismus weist eine Spannstange 21 mit einem Antriebskopf 25 auf. Mittels der Antriebsstange 21 und des Antriebskopfs 25 ist der Antriebsmechanismus 17 dazu eingerichtet, wenigstens einen Klemmkeil 23, vorzugsweise zwei Klemmkeile 23 (einer davon nicht dargestellt) zentrisch aufeinander zu zubewegen oder voneinander fort zu bewegen, je nach Drehsinn des Antriebskopfs 25. Hierdurch werden die Montageelemente 7, wenn sie sich mit den Montageausnehmungen 19 in Eingriff befinden, in ihrer Eingriffsstellung eingeklemmt, und die Spannvorrichtung 5 positionsgenau auf der Spannplatte befestigt.

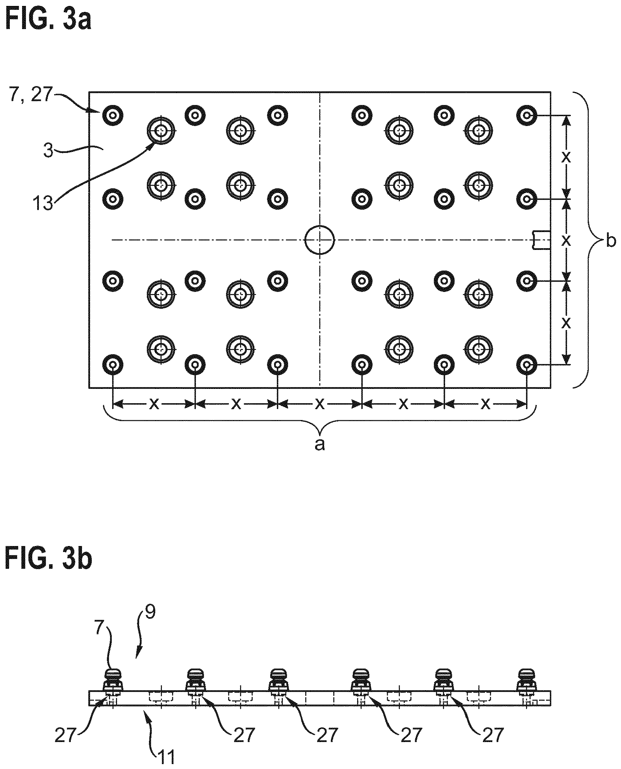

Die Spannplatte 3 gemäß einem ersten Ausführungsbeispiel ist in den Figuren 3a, b näher dargestellt. Aus den Figuren 3a, b wird ersichtlich, dass die Montageelemente 7 auf der ersten Seite 9 der Spannplatte 3 eingesetzt sind und von der gegenüberliegenden zweiten Seite 11 der Spannplatte 3 verschraubt werden können. Alternativ wäre es auch denkbar, die Montageelemente 7 permanent an der Spannplatte 3 zu befestigen, beispielsweise mittels stoffschlüssiger Verbindung.

Die Montageelemente 7 weisen vorzugsweise eine Passfläche auf, die in eine Aufnahme 27 mit korrespondierender Fassung eingesetzt werden, wobei durch Auswahl eines geeigneten Toleranzspiels der korrekte Sitz der Montageelemente 7 zueinander garantiert wird.

Die Montageelemente 7 bzw. die Aufnahmen 27 sind in einem Raster a x b angeordnet und weisen in Zeilenrichtung sowie in Spaltenrichtung zu benachbarten Aufnahmen bzw. Montageelementen jeweils einen konstanten Abstand x auf. Hierdurch ist beispielsweise bei der in Figur 3a abgebildeten Spannplatte die Anordnung von maximal sechs Spannvorrichtungen mit je vier Montageausnehmungen möglich. Wird nur eine Spannvorrichtung auf der Spannplatte 3 gemäß Figur 3a positioniert, könnte diese in bis zu 15 verschiedenen Montagepositionen angeordnet werden.

Die Spannplatte 3 bleibt hierbei frei von jeglicher Klemm-Mechanik.

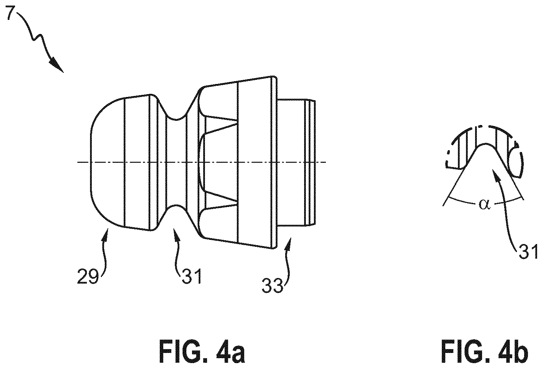

Die Montageelemente 7, die vorzugsweise als Positionierbolzen ausgebildet sind, sind näher in Figur 4a, b dargestellt. Die Montageelemente weisen einen Einführkopf 29 auf, der vorzugsweise zum erleichterten Einführen in die Montageausnehmungen jedenfalls partiell abgerundet ist. An einem zu dem Einführkopf 29 gegenüberliegend angeordneten Endabschnitt des Montageelements 7 ist ein Pass-Abschnitt 33 ausgebildet zur Installation des Montageelements7 in der Aufnahme 27 auf der Spannplatte 3.

Zwischen dem Einführkopf 29 und dem Pass-Abschnitt 33 ist ein Klemmabschnitt 31 ausgebildet, der eine im Wesentlichen V-förmige Verjüngung aufweist. Die beiden Flanken des Klemmabschnitts 31 sind um einen Winkel α zueinander angestellt. Der Winkel α korrespondiert vorzugsweise mit einem Winkel des Klemmelements 23 des Befestigungsmechanismus 17, sodass das Klemmelement 23 an den Flanken des Klemmabschnitts 31 entlanggleiten kann, während es die Montageelemente 7 in der Montageausnehmung 19 einklemmt.

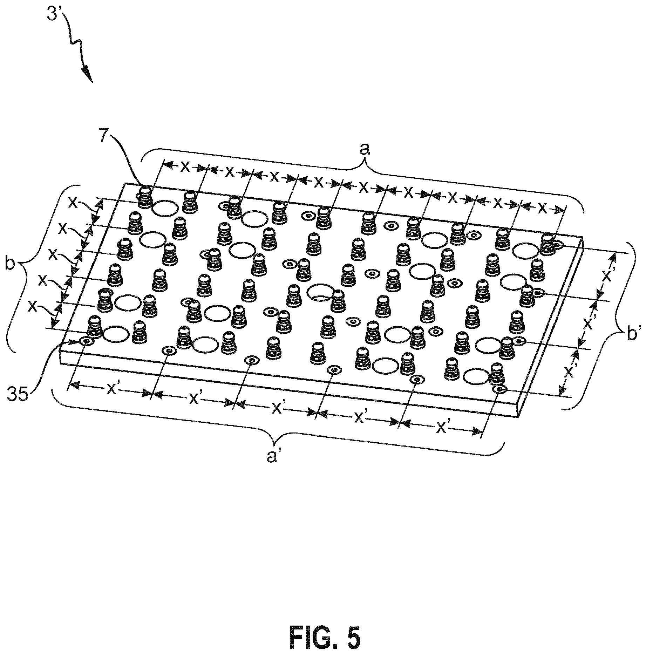

In Figur 5 ist ein alternatives, aber ebenfalls bevorzugtes Muster einer Spannplatte gezeigt. Die in Figur 5 gezeigte Spannplatte 3' weist neben dem Raster a x b, bei dem die Montageelemente 7 beziehungsweise Aufnahme 27 in einem Abstand x jeweils benachbart zueinander beabstandet sind, noch ein zweites Raster a' x b' auf. In dem Raster a' x b' sind ebenfalls Aufnahmen 27 für Montageelemente 7 ausgebildet. Diese sind in der gezeigten Figur 5 allerdings nicht mit einem Montageelement belegt, sondern mittels Schutzstopfen 35 verschlossen, wobei die Schutzstopfen 35 nicht aus der Oberfläche der Spannplatte 3' hervorstehen.

Die Spannplatte 3' kann daher in einem Nullpunktspannsystem gemäß der Erfindung eingesetzt werden, wenn beispielsweise der Wechsel von Spannvorrichtungen für das Raster a x b hin zu Spannvorrichtungen für das Raster a' x b' notwendig wird, beispielsweise, wenn bestimmte Spannvorrichtungen bestimmter Hersteller für wiederum bestimmte Anwendungen erforderlich sind.

Die Schutzstopfen 35 sind dazu eingerichtet, die Aufnahmen 27 vor Eindringen von Verschmutzungen zu schützen.

In den vorstehenden Figuren 1 und 2 ist eine Spannvorrichtung 5 mit integriertem Befestigungsmechanismus 17 gezeigt worden.

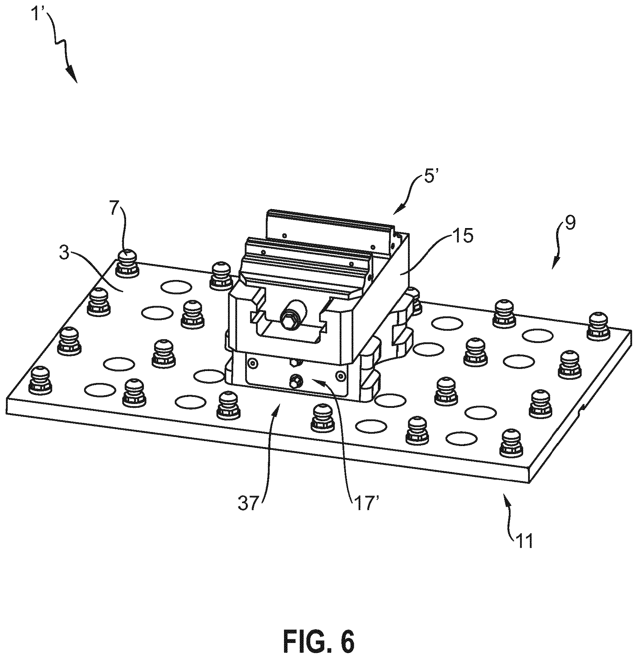

Figur 6 zeigt ein Spannsystem 1', welches nach dem gleichen erfindungsgemäßen Prinzip arbeitet wie das Spannsystem 1 gemäß Figur 1. Die Spannvorrichtung 5' weist ebenfalls einen Grundkörper 15 auf. Zusätzlich weist das Spannsystem 1' einen Spannadapter 37 auf, der einen Befestigungsmechanismus 17' beherbergt. Der Befestigungsmechanismus 17' muss in diesem Ausführungsbeispiel also nicht in den Grundkörper 15 integriert werden. Der Spannadapter 37 stellt einerseits die positionsgenaue Verbindung zur Spannplatte 3 her und andererseits zur Spannvorrichtung 5'. Die Implementierung des Befestigungsmechanismus 17' in einem Spannadapter 37 bietet den Vorteil, dass die Spannvorrichtung 5' auch eine konventionelle Spannvorrichtung sein kann, die zuvor beispielsweise auf herkömmlichen Spannplatten mit der darin implementierten Mechanik verspannt wurde. Bei solchen Systemen hat die Spannvorrichtung selbst also nach unten vorstehende Montageelemente.

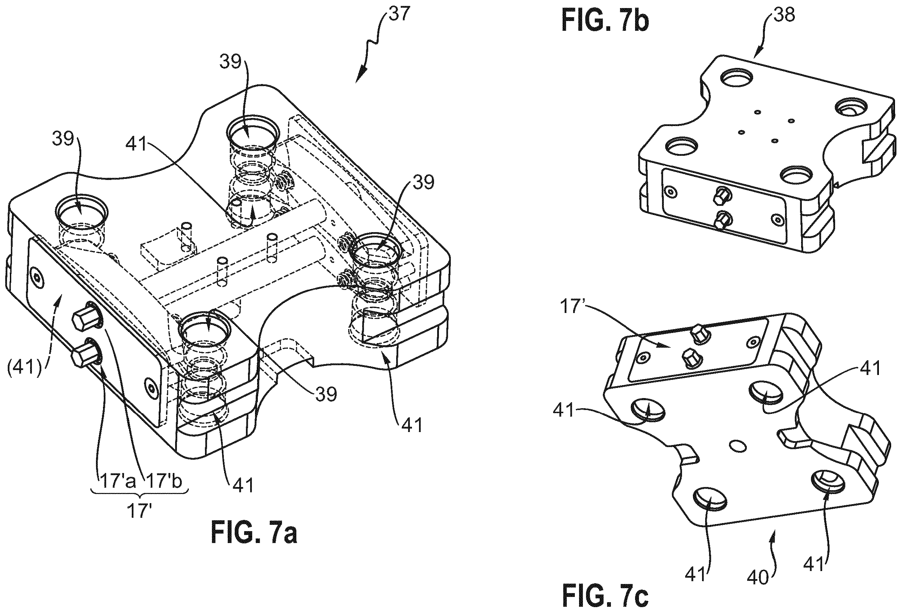

Wie die Figuren 7a - c näher zeigen, nimmt der Spannadapter 37 sowohl die Montageelemente 7 der Spannplatte in sich auf als auch etwaige Montageelemente einer Spannvorrichtung 5'. Hierzu weist der Spannadapter 37 auf einer ersten, der Spannplatte 3 bzw. 3' zugeordneten Seite 40 eine Anzahl von Ausnehmungen 41 auf, die mit den (ersten) Montageelementen 7 von Seiten der Spannplatte 3, 3' her in Eingriff gebracht werden. Zusätzlich weist der Spannadapter 37 auf einer der ersten Seite 40 gegenüberliegenden zweiten Seite 38 eine zweite Anzahl Montageausnehmungen 39 auf, die zur Aufnahme der Montageelemente (nicht gezeigt) der Spannvorrichtung 5' eingerichtet sind. Die Ausnehmungen 39, 40 können ineinander übergehen.

Der Befestigungsmechanismus 17' des Spannadapters 37 umfasst einen ersten Befestigungsmechanismus 17'a und einen zweiten Befestigungsmechanismus 17'b, die jeweils funktional nach dem Vorbild des Befestigungsmechanismus 17 gemäß Figuren 1 und 2 ausgebildet sein können. Die Flexibilität, den Spannadapter an der Spannvorrichtung 5' permanent zu fixieren oder an der Spannplatte, wird durch wahlweises Lösen und Befestigen mittels des ersten und zweiten Befestigungsmechanismus 17'a, 17'b gewährleistet.

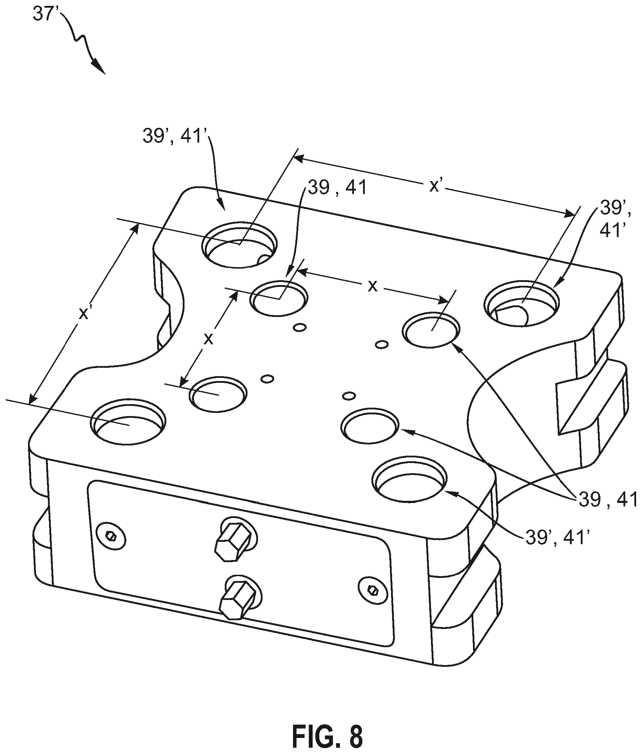

Der Spannadapter 37 gemäß Figur 7a - c trägt Montageausnehmungen 39, 41 für ein einziges Raster der Spannplatte. Eine mögliche Alternative ist in Figur 8 dargestellt. Der Spannadapter 37' gemäß Figur 8 weist neben den Montageausnehmungen 39, 41, die zueinander den Abstand x einnehmen, ferner einen zweiten Satz Montageausnehmungen 39', 41' auf, die zueinander den Abstand x' einnehmen. Ein solcher Spannadapter 37' wäre beispielsweise für eine Spannplatte 3' sehr flexibel einsetzbar.

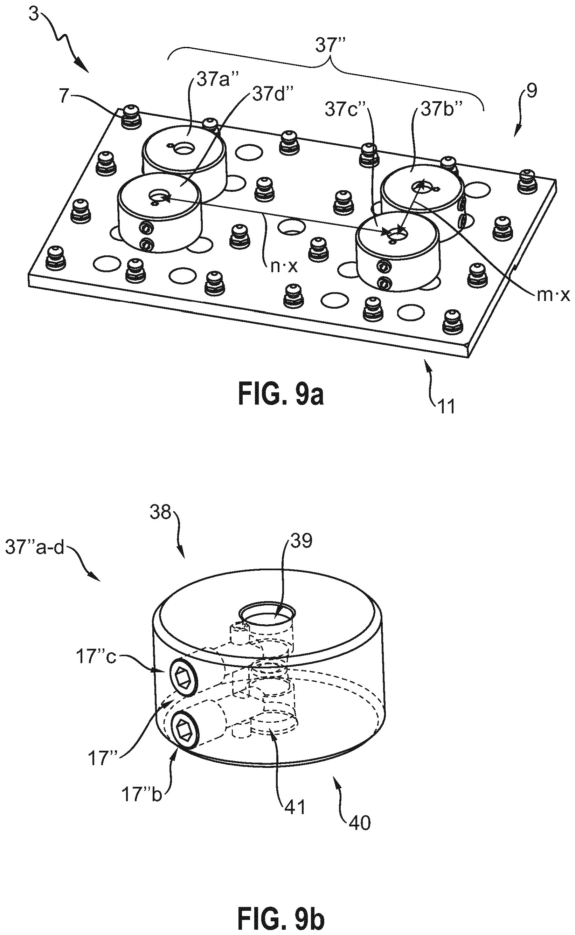

Der Spannadapter 37 und der Spannadapter 37' gemäß den Figuren 1 - 8 sind jeweils einteilige Bauteile gewesen. Es ist im Rahmen der Erfindung vorzugsweise auch vorgesehen, Spannadapter wie den Spannadapter 37" vorzuschlagen, der in Figur 9a, b abgebildet ist. Der Spannadapter 37" besteht aus mehreren separaten Spannelementen. Im gezeigten Ausführungsbeispiel sind insgesamt vier Spannelemente 37"a, b, c, d auf einer Spannplatte 3 angeordnet. Die Spannelemente 37"a - d weisen wie auch die anderen Spannadapter gemäß der Erfindung eine erste Seite 40 und eine gegenüberliegende zweite Seite 38 auf, in denen jeweils Montageausnehmungen 39, 41 ausgebildet sind und in die die Montageelemente 7 gemäß der Erfindung eingesetzt werden können. Auch die Spannelemente 37"a - d weisen einen Befestigungsmechanismus 17" auf, der zwei separate Befestigungsmechanismen 17"a, 17"b in sich vereint und es ermöglicht, wahlweise eine oder beide Verbindungen zwischen Spannvorrichtung und Spannelement einerseits und Spannplatte und Spannelement andererseits zu lösen oder zu fixieren.

Ein Vorteil des mehrteiligen Spannadapters 37" gemäß Figur 9a, b wird darin gesehen, dass abweichend von der durch die Spannplatte 3, 3' vorgegebenen Rasterung Abstände in Richtung a/a' gewählt werden können, die von den Abständen in Richtung b/b' der dort gezeigten Raster abweichen, nämlich jeweils um ein ganzzahliges Vielfaches m beziehungsweise n des Rasterabstandes x bzw. x'.

## Patentansprüche

1. Nullpunktspannsystem (1) für Werkzeugmaschinen, insbesondere für Dreh- und/oder Fräsmaschinen, wobei das Nullpunktspannsystem (1) aufweist:
- eine Spannplatte (3,3'), die dazu eingerichtet ist, ortsfest relativ zu der Werkzeugmaschine angeordnet zu werden,
- mindestens eine Spannvorrichtung (5,5') zum Spannen von Werkstücken, die dazu eingerichtet ist, auf der Spannplatte (3,3') montiert zu werden, und
- einen Befestigungsmechanismus (17,17',17"), der dazu eingerichtet ist, die Spannvorrichtung (5,5') an der Spannplatte (3,3') reversibel lösbar zu befestigen, **dadurch gekennzeichnet, dass**
- die Spannvorrichtung (5,5') mehrere Montageausnehmungen (19, 41) aufweist, und die Spannplatte (3,3') eine Mehrzahl von Montageelementen (7) aufweist, die dazu eingerichtet sind, in die Montageausnehmungen (19) der Spannvorrichtung (5,5') einzugreifen, und
- die Spannvorrichtung (5,5') den Befestigungsmechanismus (17,17',17") aufweist, wobei der Befestigungsmechanismus (17,17',17") dazu eingerichtet ist, die Montageelemente (7) reversibel lösbar zu fixieren, wenn jene sich mit den korrespondierenden Montageausnehmungen (19, 41) in Eingriff befinden.

2. Nullpunktspannsystem (1) nach Anspruch 1, wobei die Montageelemente (7) permanent an der Spannplatte (3,3') befestigt sind, oder reversibel lösbar in dafür vorgesehenen Aufnahmen (27) installiert sind.

3. Nullpunktspannsystem (1) nach Anspruch 2, wobei die Spannplatte (3,3') ihrerseits eine Vielzahl von Montageelementen (7), oder Aufnahmen (27) für die Montageelemente (7), aufweist, und wobei die Anzahl jener Montageelemente (7), oder Aufnahmen (27) für die Montageelemente (7), auf der Spannplatte (3,3') höher ist als die Anzahl der Montageausnehmungen (19, 41) an jeweils einer Spannvorrichtung (5,5').

4. Nullpunktspannsystem (1) nach Anspruch 2 oder 3, wobei die Aufnahmen für die Montageelemente (7) auf der Spannplatte (3,3') in einem Raster (a x b; a' x b') mit einem vorbestimmten Abstand (x; x') zwischen jeweils benachbarten Montageelementen (7) angeordnet sind.

5. Nullpunktspannsystem (1) nach Anspruch 4, wobei die Spannplatte (3,3') ein erstes Raster (a x b) aufweist, das einen ersten Abstand (x) zwischen jeweils benachbarten Aufnahmen (27) für die Montageelemente (7) definiert, und wenigstens ein zusätzliches zweites Raster (a' x b'), das einen zweiten Abstand (x') zwischen jeweils benachbarten Aufnahmen (27) für die Montageelemente (7) definiert.

6. Nullpunktspannsystem (1) nach Anspruch 4 oder 5, wobei Aufnahmen (27), die nicht von jeweils einem Montageelement (7) belegt sind, mittels eines Schutzstopfens (35) verschlossen sind, wobei der Schutzstopfen (35) weiter vorzugsweise so dimensioniert ist, dass er in eingesetztem Zustand vollständig in der Aufnahme (27) versenkt ist.

7. Nullpunktspannsystem (1) nach einem der vorstehenden Ansprüche, wobei die Spannvorrichtung (5) einen Grundkörper (15) aufweist, und der Befestigungsmechanismus (17) in den Grundkörper integriert ist.

8. Nullpunktspannsystem (1) nach einem der Ansprüche 1 bis 6, wobei die Spannvorrichtung (5') einen Grundkörper (15') aufweist, und ferner einen Spannadapter (37'), der den Befestigungsmechanismus (17') aufweist und dazu eingerichtet ist, einerseits mit dem Grundkörper (15') der Spannvorrichtung (5') reversibel lösbar verbunden zu werden, und andererseits mit der Spannplatte (3,3').

9. Nullpunktspannsystem (1) nach Anspruch 8, wobei der Spannadapter (37, 37', 37") eine erste Seitenfläche (40) aufweist, die der Spannplatte (3,3') zugeordnet ist und welche diejenigen Montageausnehmungen (39, 39') aufweist, die dazu eingerichtet sind, die Montageelemente (7) der Spannplatte (3,3') aufzunehmen.

10. Nullpunktspannsystem (1) nach Anspruch 9, wobei die Spannvorrichtung (5') eine Anzahl zweiter Montageelemente (7) aufweist, und wobei der Spannadapter (37') eine zweite Seitenfläche (38) aufweist, vorzugsweise gegenüber der ersten Seitenfläche (40), die der Spannvorrichtung (5') zugeordnet ist, und welche eine Anzahl zweiter Montageausnehmungen (41, 41')) aufweist, die dazu eingerichtet sind, die zweiten Montageelemente (7) der Spannvorrichtung (5') aufzunehmen.

11. Nullpunktspannsystem (1) nach Anspruch 10, wobei der Spannadapter (37, 37', 37") einen zweiten Befestigungsmechanismus (17'b, 17"b) aufweist, der dazu eingerichtet ist, die zweiten Montageelemente (7) reversibel lösbar zu fixieren, wenn jene sich mit den korrespondierenden zweiten Montageausnehmungen (41, 41') in Eingriff befinden.

12. Nullpunktspannsystem (1) nach Anspruch 8, wobei der Spannadapter (37") in Form mehrerer separater Spannelelemente (37"a - 37"d) ausgebildet ist, wobei jedes Spannelement (37"a - 37"d) eine erste Seitenfläche (40) aufweist, die der Spannplatte (3,3') zugeordnet ist und welche eine Montageausnehmung (39) aufweist, die dazu eingerichtet ist, ein Montageelement der Spannplatte (3,3') aufzunehmen.

13. Nullpunktspannsystem (1) nach Anspruch 12, wobei die Spannvorrichtung (5') eine Anzahl zweiter Montageelemente (7) aufweist, und wobei der Spannadapter (37") für jedes der zweiten Montageelemente (7) ein Spannelement (37"a-37"d) aufweist, wobei das Spannelement eine zweite Seitenfläche (38) aufweist, vorzugsweise gegenüber der ersten Seitenfläche (40), die der Spannvorrichtung (5,5') zugeordnet ist, und welche eine zweite Montageausnehmung (41) aufweist, die dazu eingerichtet ist, eines der zweiten Montageelemente (7) der Spannvorrichtung (5,5') aufzunehmen.

14. Nullpunktspannsystem (1) nach Anspruch 13, wobei das Spannelement (37") einen zweiten Befestigungsmechanismus (17"b) aufweist, der dazu eingerichtet ist, das zweite Montageelement (7) reversibel lösbar zu fixieren, wenn jenes sich mit der korrespondierenden zweiten Montageausnehmung (39) in Eingriff befindet.

15. Nullpunktspannsystem (1) nach einem der vorstehenden Ansprüche, wobei die Spannvorrichtung (5,5') als Zentrierspanner mit zwei Spannbacken ausgebildet ist.

16. Nullpunktspannsystem (1) nach einem der vorstehenden Ansprüche, wobei die Spannvorrichtung (5,5') als zentrisch spannendes Mehrbackenfutter, insbesondere als Drei- oder Vierbackenspannfutter ausgebildet ist, vorzugsweise als Vierbacken-Ausgleichsspannfutter.

## Claims

1. Zero-point clamping system (1) for tool machines, in particular for lathes and/or milling machines, wherein the zero-point clamping system (1) has:
- a clamping plate (3, 3') which is set up to be arranged stationarily in relation to the tool machine,
- at least one clamping device (5, 5') for clamping workpieces, which is set up to be mounted on the clamping plate (3, 3'), and
- a fixing mechanism (17, 17', 17") which is set up to reversibly releasably fix the clamping device (5, 5') on the clamping plate (3, 3')
**characterised in that**
- the clamping device (5, 5') has several mounting recesses (19, 41), and the clamping plate (3, 3') has a plurality of mounting elements (7), which are set up to engage in the mounting recesses (19) of the clamping device (5, 5'), and
- the clamping device (5, 5') has the fixing mechanism (17, 17', 17"), wherein the fixing mechanism (17, 17', 17") is set up to reversibly releasably fix the mounting elements (7) when they are in engagement with the corresponding mounting recesses (19,41).

2. Zero-point clamping system (1) according to claim 1, wherein the mounting elements (7) are fixed permanently on the clamping plate (3, 3'), or are installed reversibly releasably in recesses (27) provided for this purpose.

3. Zero-point clamping system (1) according to claim 2, wherein the clamping plate (3, 3'), for its part, has a plurality of mounting elements (7) or recesses (27) for the mounting elements (7), and wherein the number of these mounting elements (7) or recesses (27) for the mounting elements (7) on the clamping plate (3, 3') is higher than the number of the mounting recesses (19, 41) on a respective clamping device (5, 5').

4. Zero-point clamping system (1) according to claim 2 or 3, wherein the recesses for the mounting elements (7) are arranged on the clamping plate (3, 3') in a grid (a x b; a' x b') with a predetermined distance (x; x') between respectively adjacent mounting elements (7).

5. Zero-point clamping system (1) according to claim 4, wherein the clamping plate (3, 3') has a first grid (a x b) which defines a first distance (x) between respectively adjacent recesses (27) for the mounting elements (7), and at least one additional second grid (a' x b') which defines a second distance (x') between respectively adjacent recesses (27) for the mounting elements (7).

6. Zero-point clamping system (1) according to claim 4 or 5, wherein recesses (27) that are not respectively occupied by a mounting element (7) are sealed by means of a protective plug (35), wherein the protective plug (35) is further preferably dimensioned in such a way that, in the inserted state, it is completely countersunk in the recess (27).

7. Zero-point clamping system (1) according to one of the preceding claims, wherein the clamping device (5) has a base body (15), and the fixing mechanism (17) is integrated into the base body.

8. Zero-point clamping system (1) according to one of claims 1 to 6, wherein the clamping device (5') has a base body (15') and, furthermore, a clamping adapter (37') which has the fixing mechanism (17') and is set up to be reversibly releasably connected on one side to the base body (15') of the clamping device (5') and on the other side to the clamping plate (3, 3').

9. Zero-point clamping system (1) according to claim 8, wherein the clamping adapter (37, 37', 37") has a first lateral surface (40) which is allocated to the clamping plate (3, 3') and which has the mounting recesses (39, 39') that are set up to receive the mounting elements (7) of the clamping plate (3, 3').

10. Zero-point clamping system (1) according to claim 9, wherein the clamping device (5') has a number of second mounting elements (7), and wherein the clamping adapter (37') has a second lateral surface (38), preferably opposite the first lateral surface (40), which is allocated to the clamping device (5'), and which has a number of second mounting recesses (41, 41')), which are set up to receive the second mounting elements (7) of the clamping device (5').

11. Zero-point clamping system (1) according to claim 10, wherein the clamping adapter (37, 37', 37") has a second fixing mechanism (17'b, 17"b), which is set up to reversibly releasably fix the second mounting elements (7) when these are in engagement with the corresponding second mounting recesses (41, 41').

12. Zero-point clamping system (1) according to claim 8, wherein the clamping adapter (37") is formed in the form of several separate clamping elements (37"a - 37"d), wherein each clamping element (37"a - 37"d) has a first lateral surface (40), which is allocated to the clamping plate (3, 3') and which has a mounting recess (39) which is set up to receive a mounting element of the clamping plate (3, 3').

13. Zero-point clamping system (1) according to claim 12, wherein the clamping device (5') has a number of second mounting elements (7), and wherein the clamping adapter (37") for each of the second mounting elements (7) has a clamping element (37"a-37"d), wherein the clamping element has a second lateral surface (38), preferably opposite the first lateral surface (40), which is allocated to the clamping device (5, 5'), and which has a second mounting recess (41) which is set up to receive one of the second mounting elements (7) of the clamping device (5, 5').

14. Zero-point clamping system (1) according to claim 13, wherein the clamping element (37") has a second fixing mechanism (17"b) which is set up to reversibly releasably fix the second mounting element (7) when it is in engagement with the corresponding second mounting recess (39).

15. Zero-point clamping system (1) according to one of the preceding claims, wherein the clamping device (5, 5') is formed as a centring clamp with two clamping jaws.

16. Zero-point clamping system (1) according to one of the preceding claims, wherein the clamping device (5, 5') is formed as a centrally clamping multiple jaw chuck, in particular as a three- or four-jaw chuck, preferably as a four-jaw compensation chuck.

## Revendications

1. Système de serrage à point zéro (1) pour machines-outils, en particulier pour tours et/ou fraiseuses, dans lequel le système de serrage à point zéro (1) présente :
- une plaque de serrage (3, 3'), qui est conçue pour être disposée de manière fixe par rapport à la machine-outil,
- au moins un dispositif de serrage (5, 5') pour serrer des pièces, qui est conçu pour être monté sur la plaque de serrage (3, 3'), et
- un mécanisme de fixation (17, 17', 17"), qui est conçu pour fixer le dispositif de serrage (5, 5') sur la plaque de serrage (3, 3') de façon détachable de manière réversible,
**caractérisé en ce que**
- le dispositif de serrage (5, 5') présente plusieurs évidements de montage (19, 41), et la plaque de serrage (3, 3') présente une pluralité d'éléments de montage (7), qui sont conçus pour s'insérer dans les évidements de montage (19, 41) du dispositif de serrage (5, 5'), et
- le dispositif de serrage (5, 5') présente le mécanisme de fixation (17, 17', 17"), dans lequel le mécanisme de fixation (17, 17', 17") est conçu pour fixer les éléments de montage (7) de façon détachable de manière réversible, lorsque ceux-ci se trouvent en prise avec les évidements de montage (19, 41) correspondants.

2. Système de serrage à point zéro (1) selon la revendication 1,
dans lequel les éléments de montage (7) sont fixés de manière permanente sur la plaque de serrage (3, 3'), ou sont installés de façon détachable de manière réversible dans des logements (27) prévus pour cela.

3. Système de serrage à point zéro (1) selon la revendication 2,
dans lequel la plaque de serrage (3, 3') présente de son côté une pluralité d'éléments de montage (7), ou des logements (27) pour les éléments de montage (7), et dans lequel le nombre d'éléments de montage (7), ou de logements (27) pour les éléments de montage (7), sur la plaque de serrage (3, 3') est plus élevé que le nombre des évidements de montage (19, 41) sur respectivement un dispositif de serrage (5, 5').

4. Système de serrage à point zéro (1) selon la revendication 2 ou 3,
dans lequel les logements pour les éléments de montage (7) sur la plaque de serrage (3, 3') sont disposés en un quadrillage (a x b ; a' x b') avec un écart (x ; x') prédéfini entre des éléments de montage (7) respectivement voisins.

5. Système de serrage à point zéro (1) selon la revendication 4,
dans lequel la plaque de serrage (3, 3') présente un premier quadrillage (a x b), qui définit un premier écart (x) entre des logements (27) respectivement voisins pour les éléments de montage (7), et au moins un deuxième quadrillage (a' x b') supplémentaire, qui définit un deuxième écart (x') entre des logements (27) respectivement voisins pour les éléments de montage (7).

6. Système de serrage à point zéro (1) selon la revendication 4 ou 5,
dans lequel les logements (27), qui ne sont pas occupés par respectivement un élément de montage (7), sont fermés au moyen d'un bouchon de protection (35), dans lequel le bouchon de protection (35) est en outre dimensionné de préférence de sorte que dans l'état inséré il est entièrement enfoncé dans le logement (27).

7. Système de serrage à point zéro (1) selon l'une quelconque des revendications précédentes,
dans lequel le dispositif de serrage (5) présente un corps de base (15), et le mécanisme de fixation (17) est intégré dans le corps de base.

8. Système de serrage à point zéro (1) selon l'une quelconque des revendications 1 à 6,
dans lequel le dispositif de serrage (5') présente un corps de base (15'), et en outre un adaptateur de serrage (37'), qui présente le mécanisme de fixation (17') et est conçu pour être relié de façon détachable de manière réversible d'une part au corps de base (15') du dispositif de serrage (5'), et d'autre part à la plaque de serrage (3, 3').

9. Système de serrage à point zéro (1) selon la revendication 8,
dans lequel l'adaptateur de serrage (37, 37', 37") présente une première surface latérale (40), qui est associée à la plaque de serrage (3, 3') et laquelle présente les évidements de montage (39, 39') qui sont conçus pour recevoir les éléments de montage (7) de la plaque de serrage (3, 3').

10. Système de serrage à point zéro (1) selon la revendication 9,
dans lequel le dispositif de serrage (5') présente un certain nombre de deuxièmes éléments de montage (7), et
dans lequel l'adaptateur de serrage (37') présente une deuxième surface latérale (38), de préférence à l'opposé de la première surface latérale (40), qui est associée au dispositif de serrage (5'), et laquelle présente un certain nombre de deuxièmes évidements de montage (41, 41')), qui sont conçus pour recevoir les deuxièmes éléments de montage (7) du dispositif de serrage (5').

11. Système de serrage à point zéro (1) selon la revendication 10,
dans lequel l'adaptateur de serrage (37, 37', 37") présente un deuxième mécanisme de fixation (17'b, 17"b), qui est conçu pour fixer les deuxièmes éléments de montage (7) de façon détachable de manière réversible, lorsque ceux-ci se trouvent en prise avec les deuxièmes évidements de montage (41, 41') correspondants.

12. Système de serrage à point zéro (1) selon la revendication 8,
dans lequel l'adaptateur de serrage (37") est réalisé sous forme de plusieurs éléments de serrage (37"a-37"d) séparés, dans lequel chaque élément de serrage (37"a-37"d) présente une première surface latérale (40), qui est associée à la plaque de serrage (3, 3') et laquelle présente un évidement de montage (39), qui est conçu pour recevoir un élément de montage de la plaque de serrage (3, 3').

13. Système de serrage à point zéro (1) selon la revendication 12,
dans lequel le dispositif de serrage (5') présente un certain nombre de deuxièmes éléments de montage (7), et
dans lequel l'adaptateur de serrage (37") pour chacun des deuxièmes éléments de montage (7) présente un élément de serrage (37"a-37"d), dans lequel l'élément de serrage présente une deuxième surface latérale (38), de préférence à l'opposé de la première surface latérale (40), qui est associée au dispositif de serrage (5, 5'), et laquelle présente un deuxième évidement de montage (41), qui est conçu pour recevoir un des deuxièmes éléments de montage (7) du dispositif de serrage (5, 5').

14. Système de serrage à point zéro (1) selon la revendication 13,
dans lequel l'élément de serrage (37") présente un deuxième mécanisme de fixation (17"b), qui est conçu pour fixer le deuxième élément de montage (7) de façon détachable de manière réversible, lorsque celui-ci se trouve en prise avec le deuxième évidement de montage (39) correspondant.

15. Système de serrage à point zéro (1) selon l'une quelconque des revendications précédentes,
dans lequel le dispositif de serrage (5, 5') est réalisé en tant que serreur central avec deux mâchoires de serrage.

16. Système de serrage à point zéro (1) selon l'une quelconque des revendications précédentes,
dans lequel le dispositif de serrage (5, 5') est réalisé en tant que mandrin à plusieurs mâchoires à serrage central, en particulier en tant que mandrin de serrage à trois ou quatre mâchoires, de préférence en tant que mandrin de serrage de compensation à quatre mâchoires.
